# EUROPEAN PATENT APPLICATION

(11) **EP 4 582 310 A1**
(43) Date of publication of application: **09.07.2025**
(21) Application number: 23893113.3
(22) Date of filing: 25.06.2023
(51) Int. Cl.: B60N 2/28

(54) **ONE-DRIVE-TWO STRUCTURE FOR DRIVING ROTATION OF ROTATING DISC, AND CHILD SAFETY SEAT**

(30) Priority: 25.11.2022 CN 202223143447 U
(71) Applicant: Ningbo Baby First Baby Products Co., Ltd., Ningbo, Zhejiang 315400 (CN)
(72) Inventor: ZHOU, Xiaolin, Ningbo, Zhejiang 315400 (CN)
(74) Representative: Ipside
(86) International application number: PCT/CN2023/102057
(87) International publication number: WO 2024/109013

(57) **Abstract**

A one-drive-two structure for driving rotation of a rotating disc (2), and a child safety seat. The one-drive-two structure for driving rotation of the rotating disc (2) comprises a base (1) and a rotating disc (2); a rotation adjusting assembly (9) is mounted on the rotating disc (2); the rotation adjusting assembly (9) comprises a pull wire (91), a first pull wire rotating disc (92), a second pull wire rotating disc (93), a first rotation gear block (94), and a second rotation gear block (95); the base (1) is provided with a plurality of positioning gear slots (11); the pull wire (91) comprises a handle connection wire (911), a first branch wire (912), and a second branch wire (913); the handle connection wire (911) is connected to the first branch wire (912) and the second branch wire (913) and is connected to an adjustment handle (6), the first branch wire (912) goes around the first pull wire rotating disc (92) and then is connected to the first rotation gear block (94), and the second branch wire (913) goes around the second pull wire rotating disc (93) and then is connected to the second rotation gear block (95); and the first branch wire (912) drives the first rotation gear block (94) and the second branch wire (913) drives the second rotation gear block (95) so that the first rotation gear block (94) and the second rotation gear block (95) are separated from the positioning gear slots (11), respectively.

## Description

### Technical Field

The present invention relates to the technical field of automotive safety products, and in particular to a one-drive-two structure for driving rotation of a rotating disc, and a child safety seat.

### Background Art

The existing rotating child safety seats use a pull wire to unlock the seat back rotation function. This is achieved by connecting one end of the pull wire to the adjustment handle and the other end to the rotation adjusting assembly. When the operator pulls the adjustment handle, the pull wire moves, driving the rotation adjusting assembly to unlock the seat back rotation. However, in the existing rotation adjustment assemblies, the rotational locking block, which locks the seat to the base, is generally not directly connected to the pull cord. Instead, transmission components must be placed between the pull cord and the rotational locking block to enable the movement of the pull cord to drive the locking block for unlocking the seat back rotation. Additionally, this structure requires the pull wire to have high tensile strength, making it prone to breakage.

### Summary of the Invention

In order to solve at least one aspect of the above problems, the present invention provides a one-drive-two structure for driving rotation of a rotating disc, including a base and a rotating disc rotatably connected to each other, a seat back is mounted on the rotating disc, an adjustment handle is movably connected to the seat back, and a rotation adjusting assembly is mounted on the rotating disc. The rotation adjusting assembly includes a pull wire, a first pull wire rotating disc, a second pull wire rotating disc, a first rotation gear block and a second rotation gear block. The base is provided with a plurality of positioning gear slots adapted for cooperating with the first rotation gear block and the second rotation gear block. The pull wire includes a handle connection wire, a first branch wire and a second branch wire, and an end of the hand connecting wire is connected to an end of the first branch wire and an end of the second branch wire, and another end thereof is connected to the adjustment handle. Another end of the first branch wire is connected to the first rotation gear block after bypassing the first pull wire rotating disc, and another end of the second branch wire is connected to the second rotation gear block after bypassing the second pull wire rotating disc. When the adjustment handle is pulled and the pull wire is driven to move, the first branch wire drives the first rotation gear block, and the second branch wire drives the second rotation gear block to disengage from the positioning gear slots respectively. The seat back is driven to rotate when a rotational force is further applied to the adjustment handle.

Optionally, the first pull wire rotating disc and the second pull wire rotating disc are both rotatably connected to the rotating disc.

Optionally, the rotation adjusting assembly includes a locking shaft, which passes through the first pull wire rotating disc and the second pull wire rotating disc in sequence and is connected to the rotating disc, and the first pull wire rotating disc and the second pull wire rotating disc are both rotatably connected to the locking shaft.

Optionally, the first pull wire rotating disc is provided with a first wire guiding groove cooperating with the first branch wire, and the second pull wire rotating disc is provided with a second wire guiding groove cooperating with the second branch wire.

Optionally, the first branch wire is provided with a first fixed end, the second branch wire is provided with a second fixed end, the first rotation gear block is provided with a first mounting cavity for mounting the first fixed end, and the second rotation gear block is provided with a second mounting cavity for mounting the second fixed end.

Optionally, the rotating disc is provided with a sliding groove slidably connected to the first rotation gear block and the second rotation gear block, and a first reset member and a second reset member are mounted in the sliding groove; two ends of the first reset member are respectively connected to the first rotation gear block and the rotating disc, and two ends of the second reset member are respectively connected to the second rotation gear block and the rotating disc; the first rotation gear block is provided with a first slotted hole, and the second rotation gear block is provided with a second slotted hole, the rotation adjusting assembly further includes two screws which are respectively slidably cooperated with the first slotted hole and the second slotted hole, and the first rotation gear block and the second rotation gear block are respectively connected to the rotating disc through the screws.

Optionally, slide rail fixed plates connected to the rotating disc and a handle fixing base connected to the seat back are further provided, the seat back is slidably connected to the slide rail fixed plate, the adjustment handle is movably connected to the handle fixing base; the handle fixing base is mounted with an angle adjustment assembly for locking or unlocking a relative angular position between the seat back and the slide rail fixed plates, the angle adjustment assembly is respectively connected to the adjustment handle and the slide rail fixed plate, and when the adjustment handle moves relative to the handle fixing base, the angle adjustment assembly is driven to lock or unlock the relative angular position between the seat back and the slide rail fixed plates.

Optionally, the angle adjustment assembly includes a first gear pin and a second gear pin mounted on the handle fixing base, the first gear pin is provided with a first vertical rod, the second gear pin is provided with a second vertical rod, the adjustment handle is provided with a first inclined slot slidably engaged with the first vertical rod and a second inclined slot slidably engaged with the second vertical rod, and the slide rail fixed plates are provided with a plurality of gear holes adapted for cooperating with the first gear pin and the second gear pin, respectively.

Optionally, the angle adjustment assembly includes a third reset member, and two ends of the third reset member are respectively connected to the first gear pin and the second gear pin; the seat back is connected to a sliding shaft, and the slide rail fixed plates are provided with arc-shaped slide rails slidably connected to the sliding shaft.

Compared with the existing technology, in the one-drive-two structure for driving rotation of a rotating disc of the present invention, the first rotation gear block and the second rotation gear block to cooperate with the positioning gear slots to lock the relative position between the seat back and the base, and the adjustment handle connected with a pull wire is provided on the seat back, the pull wire includes a first branch wire for driving the first rotation gear block to move and a second branch wire for driving the second rotation gear block to move, so that when the operator pulls the adjustment handle, the pull wire can be moved to eventually drive the first rotation gear block and the second rotation gear block to disengage from the positioning gear slots, thereby realizing the release of the seat back rotation function. In this design, the tensile force exerted on the first branch wire and the second branch wire is relatively small, making them less prone to breakage. Additionally, the transmission components are eliminated, so that the overall structure is simple and the requirements for component precision are lower, resulting in easier processing and lower manufacturing costs.

In addition, the present invention further provides a child safety seat, including the above-mentioned one-drive-two structure for driving rotation of a rotating disc.

Compared with the existing technology, the child safety seat in the present invention has the same advantages as those of the above-mentioned one-drive-two structure for driving rotation of a rotating disc, which will not be repeated herein.

### Brief Description of the Drawings

FIG. 1 is a first partial exploded view of a child safety seat according to an embodiment of the present invention;
FIG. 2 is a second partial exploded view of the child safety seat according to the embodiment of the present invention;
FIG. 3 is a third partial exploded view of the child safety seat according to the embodiment of the present invention;
FIG. 4 is a partial structural view of the child safety seat in a locked state according to an embodiment of the present invention;
FIG. 5 is an enlarged view of area A in FIG. 4;
FIG. 6 is a partial cross-sectional view of the child safety seat in the locked state according to an embodiment of the present invention;
FIG. 7 is an enlarged view of area B in FIG. 6;
FIG. 8 is a partial structural view of the child safety seat according to the embodiment of the present invention when the rotating disc is unlocked and rotated;
FIG. 9 is an enlarged view of area C in FIG. 8;
FIG. 10 is a cross-sectional view of the child safety seat in the locked state according to the embodiment of the present invention;
FIG. 11 is an enlarged view of area D in FIG. 10;
FIG. 12 is a cross-sectional view of the child safety seat according to an embodiment of the present invention when the seat back angle adjustment function is unlocked;
FIG. 13 is an enlarged view of area E in FIG. 12;
FIG. 14 is a structural view of assembly of the angle adjustment assembly, the adjustment handle and the handle fixing base when the seat back angle is locked according to an embodiment of the present invention; and
FIG. 15 is a structural diagram of assembly of the angle adjustment assembly, the adjustment handle and the handle fixing base when the seat back angle is unlocked according to an embodiment of the present invention.

Reference signs are as follows:
1, base; 11, positioning gear slot; 2, rotating disc; 21, sliding groove; 3, slide rail fixed plate; 31, gear hole; 32, arc-shaped slide rail; 4, sliding shaft; 5, seat back; 6, adjustment handle; 61, first inclined slot; 62, second inclined slot; 7, handle fixing base; 8, angle adjustment assembly; 81, first gear pin; 811, first vertical rod; 82, second gear pin; 821, second vertical rod; 83, third reset member; 9, rotation adjusting assembly; 91, pull wire; 911, handle connection wire; 912, first branch wire; 9121, first fixed end; 913, second branch wire; 9131, second fixed end; 92, first pull wire rotating disc; 921, first wire guiding groove; 93, second pull wire rotating disc; 931, second wire guiding groove; 94, first rotation gear block; 941, first mounting cavity; 942, first slotted hole; 95, second rotation gear block; 951, second mounting cavity; 952, second slotted hole; 96, screw; 97, locking shaft; 98, first reset member; and 99, second reset member.

### Detailed Description of Embodiments

In order to make the above-mentioned objects, features and advantages of the present invention clearer and easier to understand, the specific embodiments of the present invention are described in detail below with reference to the accompanying drawings.

In the description of the present invention, it is to be understood that the orientation or position relationship indicated by terms such as "upper" and "lower" is based on the orientation or position relationship when the product is normally operated.

Terms "first" and "second" are used for descriptive purposes only and should not be understood as indicating or implying relative importance or implicitly indicating the number of the indicated technical features. Therefore, the features defined as "first" and "second" may explicitly or implicitly include at least one of the features.

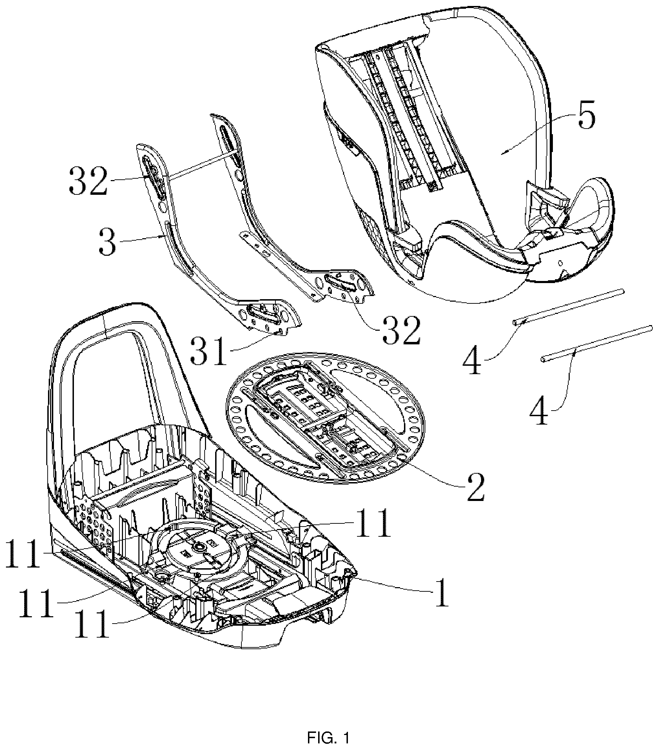

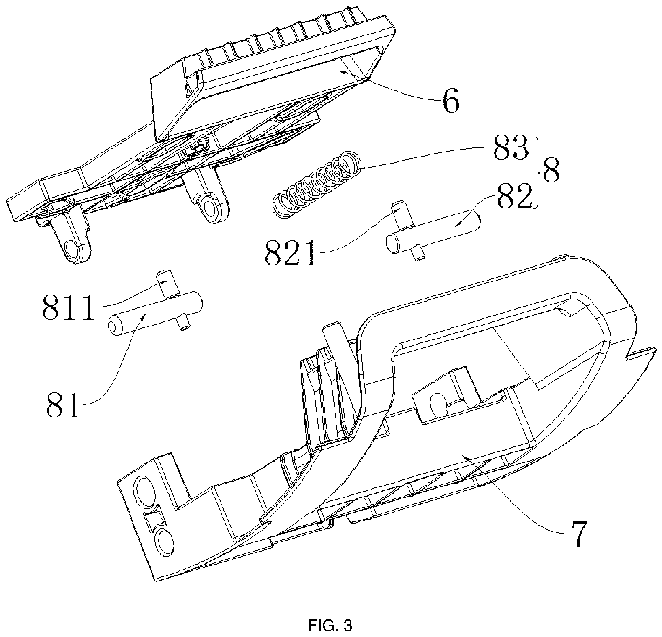

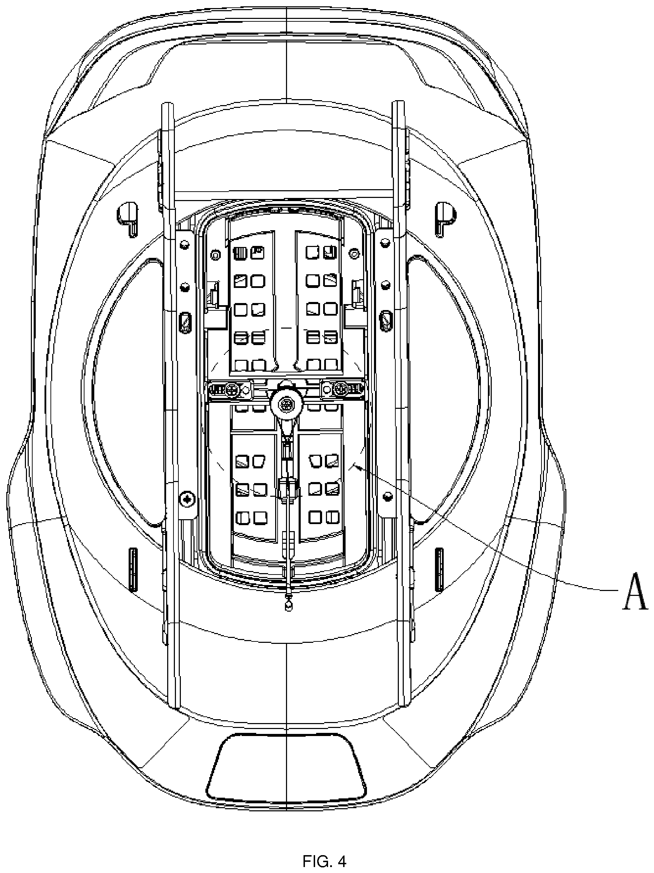

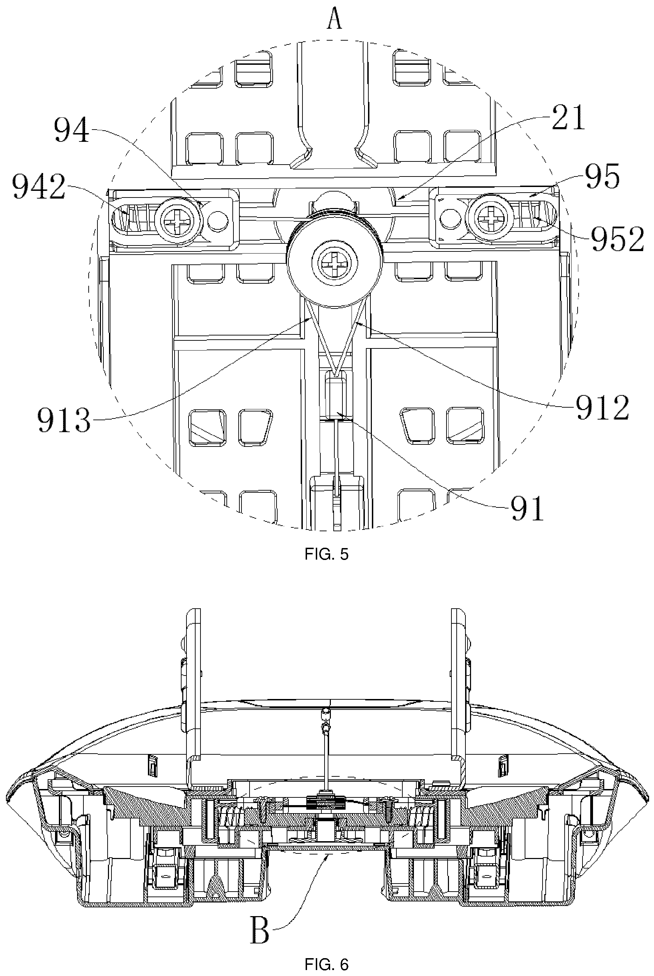

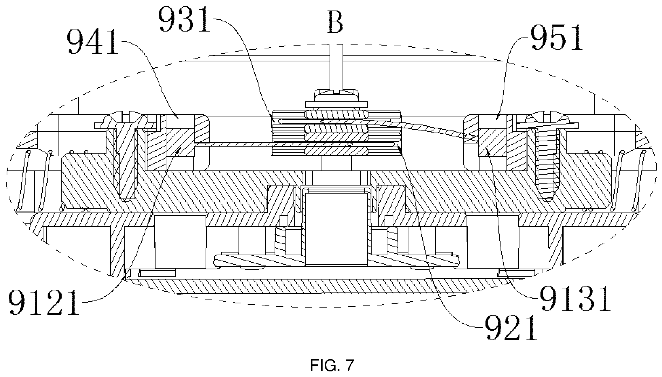

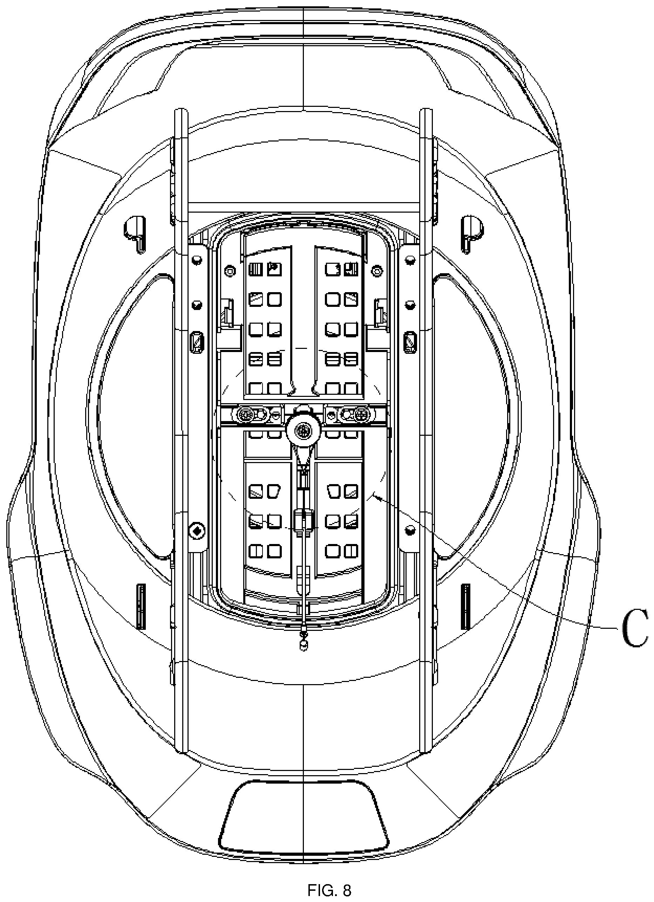

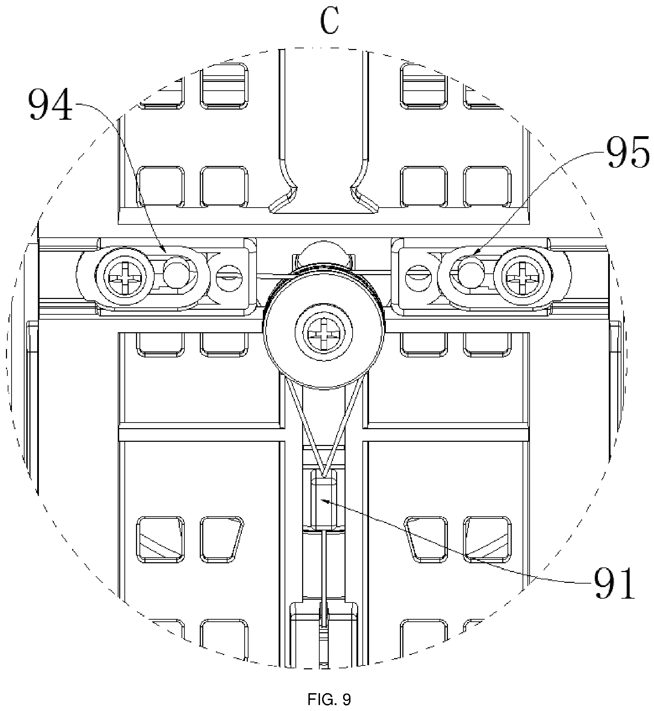

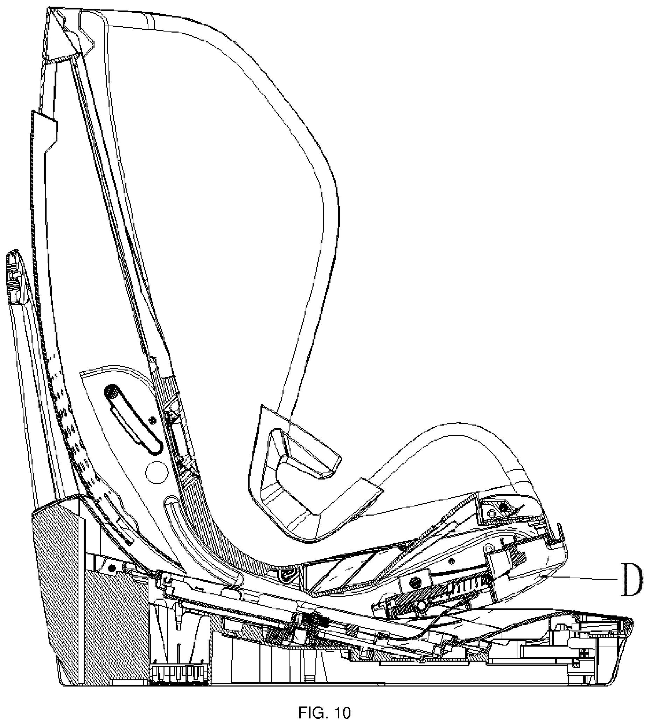

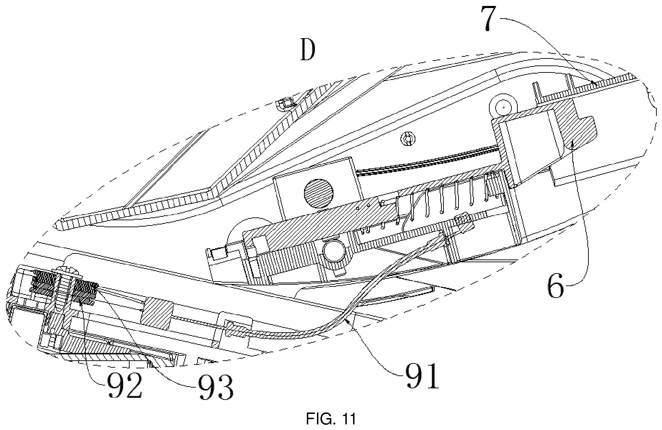

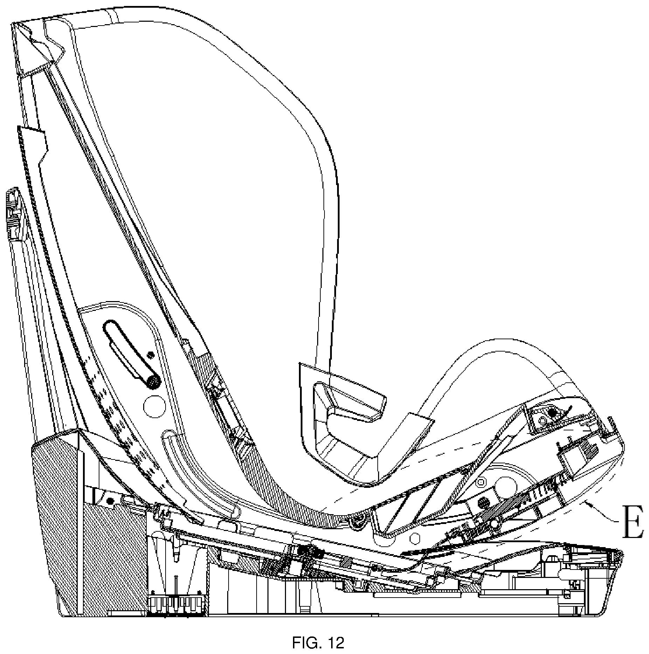

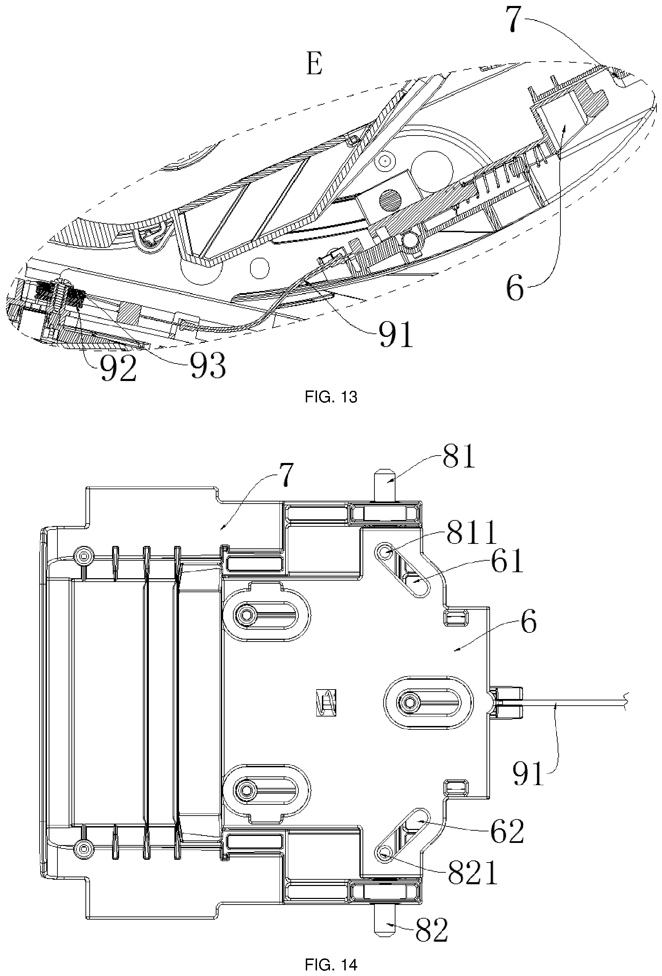

The present invention provides a one-drive-two structure for driving rotation of a rotating disc, as shown in FIGS. 1 to 13, including a base 1 and a rotating disc 2 rotatably connected to each other. A seat back 5 is mounted on the rotating disc 2, and an adjustment handle 6 is movably connected to the seat back 5. A rotation adjusting assembly 9 is mounted on the rotating disc 2, and the rotation adjusting assembly 9 includes a pull wire 91, a first pull wire rotating disc 92, a second pull wire rotating disc 93, a first rotation gear block 94 and a second rotation gear block 95, and the base 1 is provided with a plurality of positioning gear slots 11 adapted for cooperating with the first rotation gear block 94 and the second rotation gear block 95. The pull wire 91 includes a handle connection wire 911, a first branch wire 912 and a second branch wire 913, one end of the handle connection wire 911 is connected to one end of the first branch wire 912 and one end of the second branch wire 913, and the other end thereof is connected to the adjustment handle 6. The other end of the first branch wire 912 bypasses the first pull wire rotating disc 92 and is connected to the first rotation gear block 94. The other end of the second branch wire 913 bypasses the second pull wire rotating disc 93 and is connected to the second rotation gear block 95. When the adjustment handle 6 is pulled and the pull wire 91 is driven to move, the first branch wire 912 drives the first rotation gear block 94, and the second branch wire 913 drives the second rotation gear block 95 to respectively disengage from the positioning gear slots 11, and the seat back 5 is driven to rotate when a rotational force is continued to be applied to the adjustment handle 6.

Here, the first pull wire rotating disc 92 is able to change the direction in which the force from the first branch wire 912 is applied, so that when the pull wire 91 is pulled forward, the first rotation gear block 94 can move rightward. Similarly, the second pull wire rotating disc 93 is able to change the direction in which the force from the second branch wire 913 is applied, so that when the pull wire 91 is pulled forward, the second rotation gear block 95 can move leftward. The first rotation gear block 94 and the second rotation gear block 95 are driven to move by the first branch wire 912 and the second branch wire 913 respectively, so that the tensile force on the first branch wire 912 and the second branch wire 913 is relatively small compared to the force when pulling two rotation gear blocks by only one wire, thus the first branch wire 912 and the second branch wire 913 are not prone to breakage. The base 1 has an axis that allows the rotating disc 2 to rotate 360°, and the seat back 5 fixedly mounted on the rotating disc 2 can rotate 360° relative to the base 1 along with the rotating disc 2, without idling, thereby improving the user's operating experience. The adjustment handle 6 is able to move forward and backward relative to the seat back 5. When the operator pulls the adjustment handle 6 to move forward relative to the seat back 5, the pull wire 91 also moves forward, and the first branch wire 912 of the pull wire 91 drives the first rotation gear block 94 to move, and the second branch wire 913 drives the second rotation gear block 95 to move, so that the first rotation gear block 94 and the second rotation gear block 95 retract and approach each other in the left and right direction of the rotating disc 2, so as to disengage from the positioning gear slots 11, releasing the rotation function of the seat back 5. The operator continues to apply a rotating force on the adjustment handle 6 to push the seat back 5 to rotate relative to the base 1. In this embodiment, the number of the positioning gear slots 11 is four, which are divided into two groups. When the seat back 5 faces forward, the first rotation gear block 94 and the second rotation gear block 95 cooperate with the positioning gear slots 11 on the left and right respectively. When the seat back 5 faces the left or right side, the first rotation gear block 94 and the second rotation gear block 95 cooperate with the positioning gear slots 11 in the front and rear respectively. In addition, the number of positioning gear slots 11 may also be other even numbers. When the operator releases the adjustment handle 6, the adjustment handle 6 is automatically reset under the action of the reset member, and the reset member is a compression spring. The tensile strength of the handle connection wire 911 is greater than the tensile strength of the first branch wire 912 and the second branch wire 913.

The one-drive-two structure for driving rotation of a rotating disc in this embodiment utilizes the cooperation between the first rotation gear block 94 and the second rotation gear block 95 and the positioning gear slots 11 to lock the relative position between the seat back 5 and the base 1, and the adjustment handle 6 connected to the pull wire 91 is provided on the seat back 5. The pull wire 91 includes the first branch wire 912 for driving the first rotation gear block 94 to move and the second branch wire 913 for driving the second rotation gear block 95 to move. When the operator pulls the adjustment handle 6, the pull wire 91 can be moved to eventually drive the first rotation gear block 94 and the second rotation gear block 95 to disengage from the positioning gear slots 11, thereby realizing the unlocking of the rotation function of the seat back 5. In this design, the tensile force on the first branch wire 912 and the second branch wire 913 is relatively small, making them not prone to breakage. Additionally, the transmission components are eliminated, so that the overall structure is simple and the requirements for component precision are lower, resulting in easier processing and lower manufacturing costs.

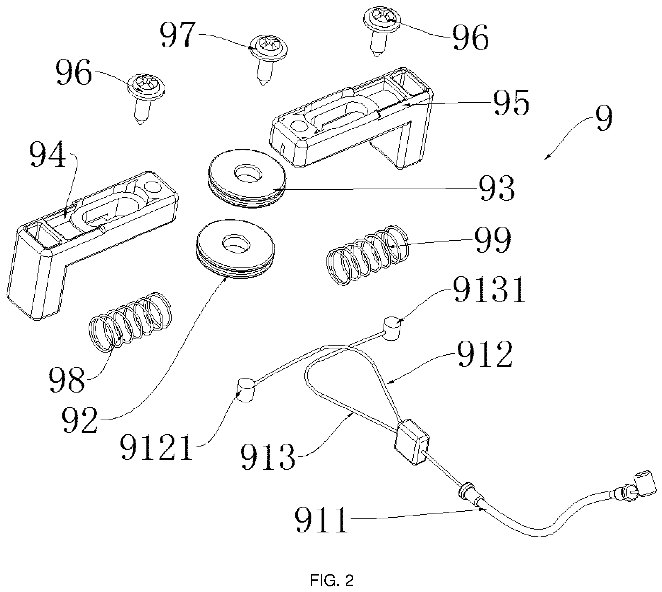

Optionally, in combination with FIGS. 2, 4 and 5, the first pull wire rotating disc 92 and the second pull wire rotating disc 93 are both rotationally connected to the rotating disc 2. The design of the rotational connection can reduce the friction between the first branch wire 912 and the first pull wire rotating disc 92 and the friction between the second branch wire 913 and the second pull wire rotating disc 93, so that the movement of the first rotation gear block 94 and the second rotation gear block 95 is smoother. Two rotating shafts may be set on the rotating disc 2 for mounting the first pull wire rotating disc 92 and the second pull wire rotating disc 93, respectively, or one rotating shaft may be set on the rotating disc 2, and the first pull wire rotating disc 92 and the second pull wire rotating disc 93 are both rotationally mounted on the rotating shaft.

Optionally, in combination with FIGS. 2, 4, and 5, the rotation adjusting assembly 9 includes a locking shaft 97 passing through the first pull wire rotating disc 92 and the second pull wire rotating disc 93 in sequence and is connected to the rotating disc 2, and the first pull wire rotating disc 92 and the second pull wire rotating disc 93 are both rotationally connected to the locking shaft 97. The first pull wire rotating disc 92 and the second pull wire rotating disc 93 are stacked on each other to reduce the occupied space. The locking shaft 97 is preferably arranged between the first rotation gear block 94 and the second rotation gear block 95, so that the pulling direction of the first branch wire 912 and the second pulling direction coincides with the left and right direction of the rotating disc 2, so that the first rotation gear block 94 and the second rotation gear block 95 are smoothly driven by the pull wire 91 to move.

Optionally, in combination with FIGS. 2, 6, and 7, the first pull wire rotating disc 92 is provided with a first wire guiding groove 921 that cooperates with the first branch wire 912, and the second pull wire rotating disc 93 is provided with a second wire guiding groove 931 that cooperates with the second branch wire 913. The first wire guiding groove 921 is arranged to prevent the first branch wire 912 from being separated from the first pull wire rotating disc 92 when the first rotation gear block 94 is pulled by the first branch wire 912. The second wire guiding groove 931 is arranged to prevent the second branch wire 913 from being separated from the second pull wire rotating disc 93 when the second rotation gear block 95 is pulled by the second branch wire 913.

Optionally, in combination with FIGS. 2, 6 and 7, the first branch wire 912 is provided with a first fixed end 9121, the second branch wire 913 is provided with a second fixed end 9131, the first rotation gear block 94 is provided with a first mounting cavity 941 for mounting the first fixed end 9121, and the second rotation gear block 95 is provided with a second mounting cavity 951 for mounting the second fixed end 9131.

The first fixed end 9121 is arranged at an end of the first branch wire 912, and the second fixed end 9131 is arranged at an end of the second branch wire 913. The first branch wire 912 is able to be connected and fixed to the first rotation gear block 94 through the cooperation between the first fixed end 9121 and the first mounting cavity, ensuring that the pull wire 91 drives the first rotation gear block 94 to move stably and reliably. The second branch wire 913 is able to be connected and fixed to the second rotation gear block 95 through the cooperation between the second fixed end 9131 and the second mounting cavity, ensuring that the pull wire 91 drives the second rotation gear block 95 to move stably and reliably.

Optionally, in combination with FIGS. 2, 4 and 5, the rotating disc 2 is provided with a sliding groove 21 slidably connected to the first rotation gear block 94 and the second rotation gear block 95, and a first reset member 98 and a second reset member 99 are mounted in the sliding groove 21, two ends of the first reset member 98 are respectively connected to the first rotation gear block 94 and the rotating disc 2, and two ends of the second reset member 99 are respectively connected to the second rotation gear block 95 and the rotating disc 2. The first rotation gear block 94 is provided with a first slotted hole 942, and the second rotation gear block 95 is provided with a second slotted hole 952, and the rotation adjusting assembly 9 further includes two screws 96 which are respectively slidably engaged with the first slotted hole 942 and the second slotted hole 952, and the first rotation gear block 94 and the second rotation gear block 95 are respectively connected to the rotating disc 2 through the screws 96.

The first reset member 98 and the second reset member 99 are compression springs. When the pull wire 91 is pulled forward by the adjustment handle 6, the first rotation gear block 94 and the second rotation gear block 95 approach each other in the left and right direction of the rotating disc 2 and compress the first reset member 98 and the second reset member 99, respectively. When a desired rotational position is reached and the pulling force on the pull wire 91 is released, the first rotation gear block 94 and the second rotation gear block 95 automatically move away from each other under the elastic force of the first reset member 98 and the second reset member 99 respectively, so that the first rotation gear block 94 and the second rotation gear block 95 are able to match and be engaged with the positioning gear slots 11 again, thereby ensuring a simple and reliable structure. The first slotted hole 942 and the second slotted hole 952 have a certain length, and a lengthwise direction thereof coincides with the left and right direction of the rotating disc 2. The screws 96 are capable of limiting the upward and downward movement of the first rotation gear block 94 and the second rotation gear block 95, ensuring that the first rotation gear block 94 and the second rotation gear block 95 can move along a given direction. With the connection through the pull wire 91, the first rotation gear block 94 and the second rotation gear block 95 are driven to perform left and right translational movement by the adjustment handle 6, so that a 360° rotation can be achieved at any rotation position.

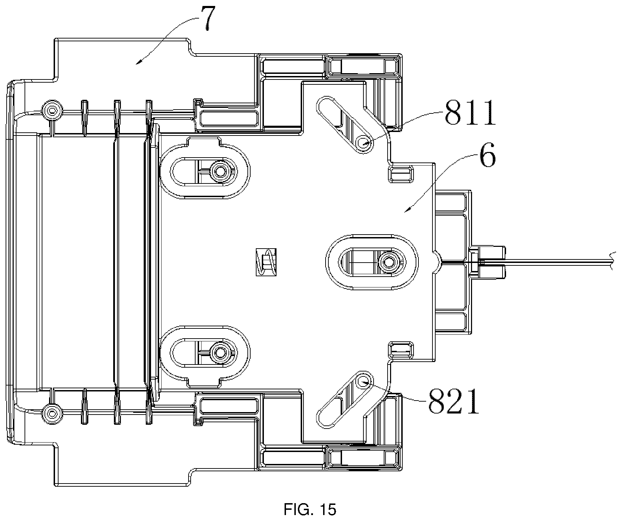

Optionally, in combination with FIGS. 1, 3 and 10-15, slide rail fixed plates 3 connected to the rotating disc 2 and a handle fixing base 7 connected to the seat back 5 are further provided. The seat back 5 is slidably connected to the slide rail fixed plates 3, and the adjustment handle 6 is movably connected to the handle fixing base 7. The handle fixing base 7 is mounted with an angle adjustment assembly 8 for locking or unlocking a relative angular position between the seat back 5 and the slide rail fixed plates 3. The angle adjustment assembly 8 is respectively connected to the adjustment handle 6 and the slide rail fixed plates 3. The adjustment handle 6 moves relative to the handle fixing base 7 to drive the angle adjustment assembly 8 to lock or unlock the relative angular position between the seat back 5 and the slide rail fixed plates 3.

The slide rail fixed plates 3 are fixedly connected to the rotating disc 2 by means of screws, that is, the slide rail fixed plates 3 are capable of rotating synchronously with the rotating disc 2. An outer sheath of the pull wire 91 is fixed on the rotating disc 2 and the handle fixing base 7, and the pull wire 91 can move freely within the outer sheath. The handle fixing base 7 is connected and fixed to the seat back 5 by means of screws, and the adjustment handle 6 is fixed on the handle fixing base 7 and can move forward and backward relative to the handle fixing base 7. When the adjustment handle 6 is pulled forward relative to the seat back 5, in addition to driving the rotation adjusting assembly 9 to release the rotation function of the rotating disc 2, it also drives the angle adjustment assembly 8 to move, so that the seat back 5 is unlocked from the slide rail fixed plates 3, and then the seat back 5 can be moved in the front and rear direction to adjust the angle relative to the slide rail fixed plates 3, thereby realizing the function of adjusting the angle of the seat back 5, which allows convenience and ease of use and diversified functions.

Optionally, in combination with FIGS. 1, 3, and 10-15, the angle adjustment assembly 8 includes a first gear pin 81 and a second gear pin 82 mounted on the handle fixing base 7, the first gear pin 81 is provided with a first vertical rod 811, the second gear pin 82 is provided with a second vertical rod 821, the adjustment handle 6 is provided with a first inclined slot 61 in sliding engagement with the first vertical rod 811 and a second inclined slot 62 in sliding engagement with the second vertical rod 821. The slide rail fixed plates 3 are provided with a plurality of gear holes 31 that are respectively adapted for cooperating with the first gear pin 81 and the second gear pin 82.

When the first gear pin 81 and the second gear pin 82 are locked with the gear holes 31 respectively, the first gear pin 81 and the second gear pin 82 are in an extended state relative to the handle fixing base 7, meanwhile the first vertical rod 811 is located at a front end position of the first inclined slot 61, and the second vertical rod 821 is located at a front end position of the second inclined slot 62. When the adjustment handle 6 is pulled forward, the first vertical rod 811 moves to a rear end of the first inclined slot 61 and the second vertical rod 821 moves to a rear end of the second inclined slot 62, allowing the first gear pin 81 and the second gear pin 82 to be retracted inwardly into the handle fixing base 7, so that the first gear pin 81 and the second gear pin 82 are disengaged from the gear holes 31, thereby unlocking the relative angular position between the seat back 5 and the slide rail fixed plates 3. At this moment, when a force is applied to the handle fixing base 7 in the front and rear direction, the seat back 5 can be pushed to adjust the angle relative to the slide rail fixed plates 3. This structure allows a smoother operation when adjusting the angle and achieves silent adjustment operation. The rear end of the first inclined slot 61 and the rear end of the second inclined slot 62 are close to each other, and the front end of the first inclined slot 61 and the front end of the second inclined slot 62 are distant from each other. The handle fixing base 7 is provided with corresponding grooves in which the first gear pin 81 and the second gear pin 82 are movable in the left and right direction.

Optionally, in combination with FIGS. 1, 3, and 10-15, the angle adjustment assembly 8 includes a third reset member 83, two ends of the third reset member 83 are respectively connected to the first gear pin 81 and the second gear pin 82. The third reset member 83 is a compression spring, and when the relative angle position between the seat back 5 and the slide rail fixed plates 3 is in an unlocked state, the third reset member 83 is in a compressed state, and when the operator releases the adjustment handle 6, the elastic force of the third reset member 83 pushes the first gear pin 81 and the second gear pin 82 to automatically reset to lock with the gear holes 31, ensuring a reliable structure.

Optionally, in combination with FIGS. 1, 3, and 10-15, the seat back 5 is connected to sliding shafts 4, and the slide rail fixed plates 3 are provided with arc-shaped slide rails 32 slidably connected to the sliding shafts 4.

The arc-shaped slide rail 32 has a certain length to allow angle adjustment to the seat back 5. The seat back 5 is slidably connected to the slide rail fixed plates 3 through the sliding shafts 4. When the operator pulls the adjustment handle 6, the adjustment handle 6 moves forward and drives the first gear pin 81 and the second gear pin 82 to retract inward through the first inclined slot 61 and the second inclined slot 62 respectively, so that the first gear pin 81 and the second gear pin 82 are separated from the gear holes 31 on the slide rail fixed plates 3, allowing the angle of the seat back 5 to be adjusted. When the required gear is adjusted, the first gear pin 81 and the second gear pin 82 are quickly shifted into gear under the force of the third reset member 83, thereby completing the angle adjustment of the seat back 5. While the operator pulls the adjustment handle 6, the first rotation gear block 94 and the second rotation gear block 95 are also driven to move inwardly through the pull wire 91, and the first reset member 98 and the second reset member 99 are compressed, so that the first rotation gear block 94 and the second rotation gear block 95 are separated from the positioning gear slots 11. Meanwhile the operator can adjust the rotation position of the seat back 5. When it is adjusted to the required position, the adjustment handle 6 is released, the first rotation gear block 94 and the second rotation gear block 95 will quickly engage the corresponding position under the force of the first reset member 98 and the second reset member 99, respectively, thereby completing the rotation adjustment. The pull wire 91 is able to achieve the angle adjustment of the seat back 5 at any rotation angle.

Another embodiment of the present invention provides a child safety seat, including the above-mentioned one-drive-two structure for driving rotation of a rotating disc.

The child safety seat in this embodiment utilizes the first rotation gear block 94 and the second rotation gear block 95 in cooperation with the positioning gear slots 11 to lock the relative position between the seat back 5 and the base 1, and an adjustment handle 6 connected to a pull wire 91 is provided on the seat back 5. The pull wire 91 includes a first branch wire 912 for driving the first rotation gear block 94 to move and a second branch wire 913 for driving the second rotation gear block 95 to move. When the operator pulls the adjustment handle 6, the pull wire 91 is moved to eventually drive the first rotation gear block 94 and the second rotation gear block 95 to disengage from the positioning gear slots 11, thereby realizing the unlocking of the rotation function of the seat back 5. In this design, the tensile force on the first branch wire 912 and the second branch wire 913 is relatively small, making them not prone to breakage. Additionally, the transmission components are eliminated, so that the overall structure is simple and the requirements for component precision are lower, resulting in easier processing and lower manufacturing costs

Although the disclosure is described above, the protection scope of the present disclosure is not limited thereto. A person skilled in the art may make various changes and modifications without departing from the spirit and scope of the disclosure, and these changes and modifications fall within the protection scope of the present invention.

## Claims

1. A one-drive-two structure for driving rotation of a rotating disc, **characterized in that** it comprises a base (1) and a rotating disc (2) rotatably connected to each other, a seat back (5) is mounted on the rotating disc (2), and the seat back (5) is movably connected to an adjustment handle (6), a rotation adjusting assembly (9) is mounted on the rotating disc (2), the rotation adjusting assembly (9) comprises a pull wire (91), a first pull wire rotating disc (92), a second pull wire rotating disc (93), a first rotation gear block (94) and a second rotation gear block (95), the base (1) is provided with a plurality of positioning gear slots (11) adapted for cooperating with the first rotation gear block (94) and the second rotation gear block (95), the pull wire (91) comprises a handle connection wire (911), a first branch wire (912) and a second branch wire (913), an end of the handle connection wire (911) is connected to an end of the first branch wire (912) and an end of the second branch wire (913), and another end thereof is connected to the adjustment handle (6), another end of the first branch wire (912) bypasses the first pull wire rotating disc (92) and is connected to the first rotation gear block (94), another end of the second branch wire (913) bypasses the second pull wire rotating disc (93) and is connected to the second rotation gear block (95); when the adjustment handle (6) is pulled and the pull wire (91) is driven to move, the first branch wire (912) drives the first rotation gear block (94) and the second branch wire (913) drives the second rotation gear block (95) to separate from the positioning gear slots (11) respectively, and the seat back (5) is driven to rotate when a rotational force is further applied to the adjustment handle (6).

2. The one-drive-two structure for driving rotation of a rotating disc according to claim 1, **characterized in that** the first pull wire rotating disc (92) and the second pull wire rotating disc (93) are both rotationally connected to the rotating disc (2).

3. The one-to-two rotating disc rotating structure described in claim 2, **characterized in that** the rotation adjusting assembly (9) comprises a locking shaft (97), and the locking shaft (97) passes through the first pull wire rotating disc (92) and the second pull wire rotating disc (93) in sequence and is connected to the rotating disc (2), and the first pull wire rotating disc (92) and the second pull wire rotating disc (93) are both rotationally connected to the locking shaft (97).

4. The one-drive-two structure for driving rotation of a rotating disc according to claim 1, **characterized in that** the first pull wire rotating disc (92) is provided with a first wire guiding groove (921) cooperating with the first branch wire (912), and the second pull wire rotating disc (93) is provided with a second wire guiding groove (931) cooperating with the second branch wire (913).

5. The one-drive-two structure for driving rotation of a rotating disc according to claim 1, **characterized in that** the first branch wire (912) is provided with a first fixed end (9121), the second branch wire (913) is provided with a second fixed end (9131), the first rotation gear block (94) is provided with a first mounting cavity (941) for mounting the first fixed end (9121), and the second rotation gear block (95) is provided with a second mounting cavity (951) for mounting the second fixed end (9131).

6. The one-drive-two structure for driving rotation of a rotating disc according to claim 1, **characterized in that** the rotating disc (2) is provided with a sliding groove (21) slidably connected to the first rotation gear block (94) and the second rotation gear block (95), and a first reset member (98) and a second reset member (99) are mounted in the sliding groove (21), two ends of the first reset member (98) are respectively connected to the first rotation gear block (94) and the rotating disc (2), and two ends of the second reset member (99) are respectively connected to the second rotation gear block (95) and the rotating disc (2), the first rotation gear block (94) is provided with a first slotted hole (942), and the second rotation gear block (95) is provided with a second slotted hole (952), the rotation adjusting assembly (9) further comprises two screws (96) respectively slidingly cooperated with the first slotted hole (942) and the second slotted hole (952), the first rotation gear block (94) and the second rotation gear block (95) are respectively connected to the rotating disc (2) through the screws (96).

7. **The** one-drive-two structure for driving rotation of a rotating disc according to claim 1, **characterized in that** it further comprises slide rail fixed plates (3) connected to the rotating disc (2) and a handle fixing base (7) connected to the seat back (5), the seat back (5) is slidably connected to the slide rail fixed plates (3), the adjustment handle (6) is movably connected to the handle fixing base (7), the handle fixing base (7) is mounted with an angle adjustment assembly (8) for locking or unlocking a relative angular position between the seat back (5) and the slide rail fixed plates (3), the angle adjustment assembly (8) is respectively connected to the adjustment handle (6) and the slide rail fixed plates (3), and when the adjustment handle (6) moves relative to the handle fixing base (7), the angle adjustment assembly (8) is driven to lock or unlock the relative angular position between the seat back (5) and the slide rail fixed plates (3).

8. **The** one-drive-two structure for driving rotation of a rotating disc according to claim 7, **characterized in that** the angle adjustment assembly (8) comprises a first gear pin (81) and a second gear pin (82) mounted on the handle fixing base (7), the first gear pin (81) is provided with a first vertical rod (811), the second gear pin (82) is provided with a second vertical rod (821), the adjustment handle (6) is provided with a first inclined slot (61) slidingly engaged with the first vertical rod (811) and a second inclined slot (62) slidingly engaged with the second vertical rod (821), and the slide rail fixed plates (3) are provided with a plurality of gear holes (31) adapted for cooperating with the first gear pin (81) and the second gear pin (82), respectively.

9. **The** one-drive-two structure for driving rotation of a rotating disc according to claim 8, **characterized in that** the angle adjustment assembly (8) comprises a third reset member (83), and two ends of the third reset member (83) are respectively connected to the first gear pin (81) and the second gear pin (82), the seat back (5) is connected to a sliding shaft (4), and the slide rail fixed plates (3) are provided with arc-shaped slide rails (32) slidably connected to the sliding shaft (4).

10. A child safety seat, **characterized in that** it comprises the one-drive-two structure for driving rotation of a rotating disc according to any one of claims 1 to 9.
